Europäisches Patentamt

(19) European Patent Office

Office européen des brevets

(11) Publication number: **0 335 200 B1**

# (12) EUROPEAN PATENT SPECIFICATION

(45) Date of publication of patent specification :
08.01.92 Bulletin 92/02

(51) Int. Cl.⁵ : **B62D 25/06**

(21) Application number : **89104806.8**

(22) Date of filing : **17.03.89**

(54) Vehicle body with an improved connection section between the roof panel and body side, and a method for its construction.

(30) Priority : **29.03.88 IT 6728188**

(43) Date of publication of application :
**04.10.89 Bulletin 89/40**

(45) Publication of the grant of the patent :
**08.01.92 Bulletin 92/02**

(84) Designated Contracting States :
**DE ES FR GB SE**

(56) References cited :
**DE-A- 1 955 058**
**DE-C- 848 748**
**FR-A- 2 067 580**

(73) Proprietor : **FIAT AUTO S.p.A.**
**Corso Giovanni Agnelli 200**
**I-10135 Torino (IT)**

(72) Inventor : **Avataneo, Carlo**
**Via G.Deledda 10**
**I-10024 Moncalieri (IT)**

(74) Representative : **Jorio, Paolo et al**
**STUDIO TORTA Società Semplice Via Viotti 9**
**I-10121 Torino (IT)**

**Description**

This invention relates to a vehicle body with an improved connecting section between the roof panel and body side. The invention also relates to a method for constructing said body. A vehicle body, in particular a motor vehicle body, is formed by fixing together, using electric spot welding, various components such as the roof panel, the body sides and the cross-members. In the particular case of self-supporting vehicle bodies, the body sides are usually fixed to the roof panel of the vehicle passenger compartment by forming load-bearing box structures in the joining region between the body sides and roof panel, to serve as upper longitudinal members. Such systems are described in FR-A-2067580 and DE-A-1955058. Analogous longitudinal members are formed at the bottom in the joining region between the body sides and the passenger compartment floor, so that when the cross-members are fitted, a load-bearing three-dimensional lattice structure is formed. Although there are no problems involved in constructing the lower longitudinal members, the upper longitudinal members, which are usually formed by fixing the roof and body side directly together at the top and connecting them together at a lower level by a third profiled element, thus giving rise to problems both of accessibility for the necessary welding from the interior of the passenger compartment, and of finished appearance in that in modern vehicles in which for aerodynamic reasons the drip channels are dispensed with, the joint between the roof panel and body side remains in view so that on the one hand it has to be hidden by trims and/or other similar expedients, and on the other hand it has to be sealed by suitable sealants and/or further preparation to ensure that water does not infiltrate into the passenger compartment, these arrangements not only being costly but also making the assembly and completion of the vehicle body more complicated.

An object of the invention is to provide an improved vehicle body the structure of which is such as to allow simple construction of said longitudinal members and to form an exposed joint between the roof panel and body side which is aesthetically acceptable so that it does not need to be hidden from view, and requires no use of sealants and/or further preparations. A further object of the invention is to provide a method for constructing the vehicle body.

Said objects are attained according to the invention by a vehicle body comprising a sheet-metal roof panel and at least one sheet-metal body side, in which said roof panel is delimited laterally by a downwardly extending rib to which an upper longitudinal portion of the body side is rigidly fixed in line with said roof panel, characterised in that said body side upper portion and said roof panel rib are shaped in such a manner that when in mutual contact they define a closed figure in cross-section, said body side upper portion being provided with a downwardly bent upper longitudinal edge cooperating by direct abutment against the outer surface of said rib at the connection portion between this latter and said roof panel ; said upper edge of the body side upper portion being fixed to said connection portion of the roof panel rib by continuous weld seam formed in such a manner as to join said body side upper portion to said roof panel substantially without discontinuity, the lower longitudinal edge of said roof panel rib being directly fixed rigidly to said body side upper portion at the end distant from said upper edge thereof so that said roof panel rib and said body side upper portion define a load-bearing box structure.

The invention also relates to a method for forming a vehicle body comprising a roof panel, at least one body side fixed to the roof panel, and a longitudinal box member positioned laterally along said roof panel between this latter and the body side and rigid with both, characterised by comprising the following stages :

— forming a downwardly bent lateral rib along said roof panel ;

— forming at the top of said body side a portion shaped in cross-section as a transversely-disposed U and forming on said upper U-shaped portion a downwardly bent upper edge ;

— positioning said body side along said roof panel by placing said U-shaped portion facing said side rib with its concavity facing the outer surface of this latter and with its bent upper edge abutting against the upper portion which connects said side rib to said roof panel ;

— rigidly fixing the lower edge of said rib to the lower edge of said U-shaped portion of the body side ; and

— rigidly fixing said bent upper edge of the U-shaped portion to said roof panel side rib by forming a continuous weld seam without applying weld metal.

The invention will be more apparent from the non-limiting description of one embodiment thereof given hereinafter with reference to the accompanying drawing in which :

Figure 1 is a diagrammatic cross-sectional view of part of a vehicle body constructed in accordance with the invention, with its component elements shown separated from each other ; and

Figure 2 shows in the same diagrammatic sectional view as Figure 1 part of a vehicle body according to the invention during its assembly.

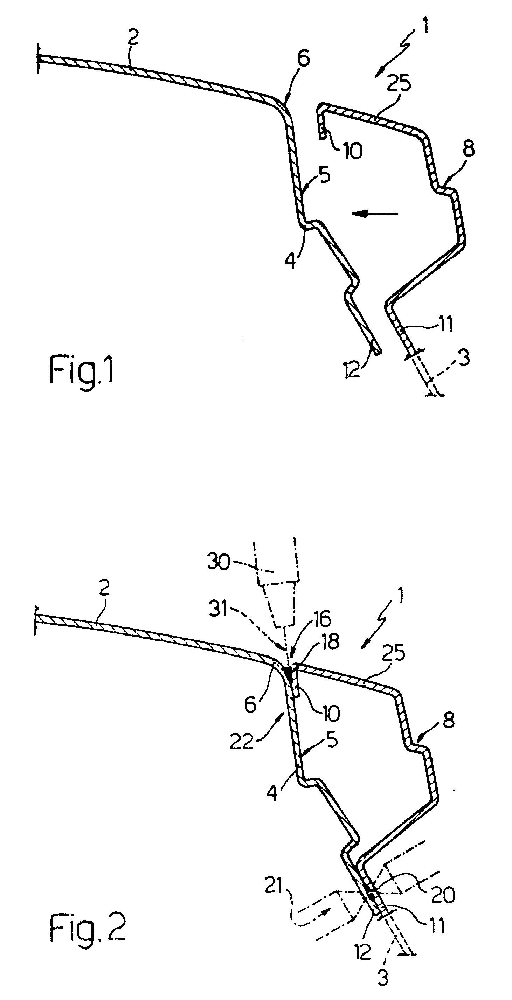

In Figures 1 and 2 the reference numeral 1 indicates overall a vehicle body generally of known type, of which for simplicity only a cross-sectioned part is shown in correspondence with a joining region of new design between the roof panel 2 and a body side 3, both constructed of sheet metal by blank cutting and bending. The roof panel 2 is delimited laterally outwards by a downwardly extending rib 4 formed integrally in one piece with the roof panel 2 by bending over a side portion thereof, said rib being shaped substantially as a V with a large opening angle so as to present a substantially concave outer surface 5, and is connected rigidly to the roof panel 2 by a curved connection portion 6. The body side 3, which is shown truncated downwards and partly by dashed lines, comprises an upper portion 8 for fixing to the roof panel 2 and which according to the invention is shaped in such a manner as to present in cross-section the shape of a U disposed transversely to the rest of the body side 3, and having its concavity facing the outer surface 5 of the rib 4. The U-shaped portion 8 comprises upperly an edge 10 bent downwards at a right angle and arranged to abut against the rib 4, and a lower flat end 11 arranged to superposedly engage the lower edge 12 of the rib 4 so that, by virtue of their shape, when the portion 8 and rib 4 are in mutual contact they define a closed polygonal geometrical figure in cross-section (Figure 2).

According to the invention, the body side 3 has its portion 8 disposed in line with the roof panel 2, with the edge 10 cooperating by abutment against the surface 5 in a position corresponding with the rounded connected portion 6, and with the portion 11 superposedly cooperating with the edge 12, to which it is disposed substantially parallel. Preferably, the bent edge 10 is shaped so as not to be perfectly parallel to the rib 4 when the roof panel 2 and body side 3 are engaged, but to slightly project towards the rib 4 so as to, in cooperation with the curvature of the portion 6, define between this latter and the upper portion 8 of the body side a fairly rounded space shaped to present a high optical extinction, so that between the surface 5 and the edge 10 there can penetrate from the outside of the vehicle body 1 without appreciable reflection a laser beam or other radiant form able to generate rapid localised heating of the portion 6 and edge 10 such as to cause them to melt with consequent interfacial welding together, with the formation of a continuous weld seam 18 obtained without the addition of weld metal and which substantially fills the space 16 when formed, so as to substantially join the portion 8 to the roof panel 2 without discontinuity. Consequently, in the vehicle body 1 according to the invention, the upper U-shaped portion 8 of the body side is rigidly and directly fixed at opposite ends to the rib 4 of the roof panel 2, firstly at its top by means of the said continuous weld seam 18 and secondly at its bottom by joining the portion 11 to the edge 12, which can be done conventionally by a plurality of spot welds 20 made electrically by a spot welder 21 of known type or, in accordance with possible non-illustrated modifications, by other methods such as bonding or other joining methods. Consequently the rib 4 and portion 6, together with the welds 18 and 20, define an overall load-bearing box structure 22 or longitudinal member disposed along the entire length of the side of the roof panel 2.

Finally according to the invention, the portion 8 comprises an upper part 25 immediately adjacent to the edge 10 and disposed in line with the roof panel 2 and having substantially the same transverse profile as this latter so as to define a lateral extension thereof when the body side 3 and roof panel 2 are engaged.

By virtue of the described structure, the vehicle body 1 according to the invention can be simply, rapidly and economically constructed using only a small number of parts and operating always from the outside of the vehicle body in very accessible positions, so that it can be easily formed by a completely automated process. A pair of ribs 4 are firstly formed, one on each side of the roof panel 2, then the U-shaped portions 8 at the top of each body side 3 complete with the bent edges 10. The body side 3 is then positioned against the roof panel 3 in known manner operating as in Figure 1 by placing them together so that the portion 8 faces the rib 4. Finally, after the portion 8 has been positioned against this latter in line with the roof panel 2 and with the edge 10 abutting against the curved connection portion 6, the edge 12 is fixed in conventional manner, by spot welding, to the lower edge 11 of the portion 8, and the edge 10 is fixed to the portion 6 by laser (or similar) welding, by focusing into the possible space 16, using a laser head 30 of any known type and operating from the outside of the vehicle body 1, for example from above the roof panel 2, a laser beam 31 able to generate the continuous seam 18 without addition of weld metal.

The advantages of the invention are apparent from the aforegoing description. The upper longitudinal members of the vehicle body 1 are obtained by the simple direct joining together of only two pieces, so eliminating the third conventional internal connection element between the body side and roof panel, this being replaced by suitable shaping of the rib 4 and portion 8. The necessary welds can all be made from the outside of the vehicle body, and the weld between the roof panel and body side which remains exposed is defined by a continuous seam such as the seam 18, shaped by virtue of the manner in which it is made such as to join substantially without discontinuity the roof panel 2 to the top 25 of the body side 3, this latter being positioned in line with the roof panel 2. Consequently no sealants are required for preventing infiltration into the passenger compartment as the exposed weld, or rather the seam 18, is continuous and therefore itself seals the vehicle body in a fluid-tight manner. A satisfactory result is also obtained from the aesthetic viewpoint as the seam 18 substantially maintains the continuity of the roof panel 2 along the joint line with the body side 3, and possibly leaving only a slight valley which can be easily masked on subsequent painting of the vehicle body.

It should be noted that a continuous seam such as the seam 18 could not be obtained in an economically acceptable manner by conventional welding means and that neither could it be obtained by laser welding if it were not for the particular shape given to the joining region between the portion 6 and edge 10 and the presence of the bent edge 10, provided fundamentally for the purpose of obtaining the type of weld necessary for satisfying the aesthetic and sealing requirements which an exposed joint between a vehicle roof panel and body side must possess.

## Claims

1. A vehicle body comprising a sheet-metal roof panel (2) and at least one sheet-metal body side (3), in which said roof panel is delimited laterally by a downwardly extending rib (4) to which an upper longitudinal portion of the body side is rigidly fixed in line with said roof panel, characterised in that said body side upper portion (8) and said roof panel rib (4) are shaped in such a manner that when in mutual contact they define a closed figure in cross-section, said body side upper portion being provided with a downwardly bent upper longitudinal edge (10) cooperating by direct abutment against the outer surface of said rib (5) at the connection portion between this latter and said roof panel (2) ; said upper edge of the body side upper portion (10) being fixed to said connection portion of the roof panel rib (6) by a continuous weld seam formed in such a manner as to join said body side upper portion (8) to said roof panel (2) substantially without discontinuity, the lower longitudinal edge of said roof panel rib (12) being directly fixed rigidly to said body side upper portion at the end distant from said upper edge thereof so that said roof panel rib (4) and said body side upper portion (8) define a load-bearing box structure.

2. A vehicle body as claimed in claim 1, characterised in that said lower edge of said rib (12) delimiting the roof panel is fixed to the lower end of said body side upper portion by a plurality of spot welds, said rib being formed integrally in one piece with said roof panel.

3. A vehicle body as claimed in claim 1 or 2, characterised in that said upper edge of said body side upper portion (10) is shaped such that when the body side and roof panel are placed together, there is formed between said edge and said portion which connects said rib to the roof panel a space able to allow a laser beam to penetrate between said outer surface of said roof panel rib and said upper edge of the body side upper portion from the outside of the vehicle body without appreciable reflection, in order to generate said continuous weld seam.

4. A vehicle body as claimed in any one of the preceding claims, characterised in that said body side upper portion (8) is substantially of U-shaped cross-section with its concavity facing said rib delimiting the roof panel, and comprises immediately adjacent to said bent upper edge an upper part (25) for fixing to the roof panel and disposed in line with this latter and having substantially the same transverse profile as this latter so as to define a lateral extension thereof.

5. A method for forming a vehicle body comprising a roof panel (2), at least one body side (3) fixed to the roof panel, and a longitudinal box member positioned laterally along said roof panel between this latter and the body side and rigid with both, characterised by comprising the following stages :
— forming a downwardly bent lateral rib (4) along said roof panel ;
— forming at the top of said body side a portion shaped in cross-section as a transversely-disposed U and forming on said upper U-shaped portion a downwardly bent upper edge (10) ;
— positioning said body side along said roof panel by placing said U-shaped portion facing said side rib with its concavity facing the outer surface of this latter and with its bent upper edge (10) abutting against the upper portion which connects said side rib to said roof panel ;
— rigidly fixing the lower edge of said rib to the lower edge of said U-shaped portion of the body side ; and
— rigidly fixing said bent upper edge of the U-shaped portion to said roof panel side rib by forming a continuous weld seam without applying a weld metal.

6. A method as claimed in claim 5, characterised in that said continuous weld seam is obtained by focusing a laser beam (31) into a space (16) which is formed between said said rib and said bent edge of the U-shaped portion of the body side by suitably shaping said upper bent edge of the U-shaped portion.

7. A method as claimed in claim 5 or 6, characterised in that said stage involving fixing said lower edge of the roof panel side rib (12) to said lower end of the U-shaped portion of the body side (11) is implemented by electric spot welding.

8. A method as claimed in any one of claims 5 to 7, characterised in that said longitudinal box member is obtained by suitably shaping said U-shaped portion of the body side (8) and said roof panel side rib (4) and then mounting the former directly against the latter.

9. A method as claimed in any one of claims 5 to 8, characterised in that said continuous weld seam (18) is formed in such a manner as to join said roof panel substantially without discontinuity to said body side upper U-shaped portion, which is disposed in line with said roof panel.

## Patentansprüche

1. Fahrzeugkarosserie aufweisend ein Dachblech (2) und wenigstens ein Karosserieseitenblech (3), in dem das Dachblech durch einen sich nach unten erstreckenden Spant (4) seitlich begrenzt ist, an dem ein oberer Längsabschnitt der Karosserieseite starr in einer Linie mit dem Dachblech befestigt ist, dadurch gekennzeichnet, daß der Karosserieseitenoberabschnitt (8) und der Dachblechspant (4) in einer solchen Weise ausgebildet sind, daß, wenn sie sich in gegenseitigem Kontakt befinden, eine im querschnitt geschlossene Figur bilden, wobei der Karosserieseitenoberabschnitt mit einer nach unten gebogenen oberen Längskante (10) versehen ist, die durch direkte Angrenzung gegen die Außenfläche des Spantes (5) am Verbindungsabschnitt zwischen diesem Letzteren und dem Dachblech (2) zusammenwirkt; die Oberkante des Karosserieseitenoberabschnittes (10) mit dem Verbindungsabschnitt des Dachblechspantes (6) durch eine kontinuierliche Schweißnaht befestigt ist, die in einer solchen Weise ausgebildet ist, den Karosserieseitenoberabschnitt (8) mit dem Dachblech (2) im wesentlichen ohne Unterbrechung zu verbinden, wobei die untere Längskante des Dachblechspantes (12) unmittelbar mit dem Karosserieseitenoberabschnitt an dem Ende, entfernt von seiner oberen Kante, starr befestigt ist, so daß der Dachblechspant (4) und der Karosserieseitenoberabschnitt (8) eine lasttragende Kastengestalt bilden.

2. Fahrzeugkarosserie nach Anspruch 1, dadurch gekennzeichnet, daß die untere Kante des Spantes (12), die das Dachblech begrenzt, am unteren Ende des Karosserieseitenoberabschnittes durch eine Anzahl von Punktschweißungen befestigt ist, wobei der Spant integral in einem Stück mit dem Dachblech ausgebildet ist.

3. Fahrzeugkarosserie nach Anspruch 1 oder 2, dadurch gekennzeichnet, daß die obere Kante des Karosserieseitenoberabschnittes (10) derart ausgebildet ist, daß, wenn die Karosserieseite und das Blechdach zusammengesetzt sind, ein Zwischenraum zwischen der Kante und dem Abschnitt, der den Spant mit dem Dachblech verbindet, gebildet wird, der erlaubt, einen Laserstrahl zwischen der Außenfläche des Dachblechspantes und der Oberkante des Karosserieseitenoberabschnittes von der Außenseite der Fahrzeugkarosserie ohne nennenswerte Reflexion durchzudringen, um die kontinuierliche Schweißnaht zu erzeugen.

4. Fahrzeugkarosserie nach irgendeinem der vorangegangenen Ansprüche, dadurch gekennzeichnet, daß der Karosserieseitenoberabschnitt (8) von im wesentlichen U-förmigen Querschnitt mit dessen Konkavität, die zu dem Spant zeigt, der das Dachblech begrenzt, ist und unmittelbar benachbart zur gebogenen Oberkante einen oberen Teil (25) zum Befestigen mit dem Dachblech aufweist und in einer Linie mit diesem Letzteren angeordnet ist und im wesentlichen das gleiche Querprofil wie dieses Letztere aufweist, um eine seitliche Erstreckung davon zu begrenzen.

5. Verfahren zum Ausbilden einer Fahrzeugkarosserie, die ein Dachblech (2), wenigstens eine Karosserieseite (3), die an dem Dachblech befestigt ist, und ein Längskastenbauteil aufweist, das seitlich entlang des Dachbleches zwischen diesem Letzteren und der Fahrzeugkarosserie und starr mit den beiden angeordnet ist, gekennzeichnet durch die folgenden Stufen :
— Ausbilden eines nach unten gebogenen Seitenspantes (4) entlang des Dachbleches ;
— Ausbilden eines Abschnittes an der Oberseite der Karosserieseite, der im Querschnitt als ein quer angeordnetes U geformt ist, und Ausbilden auf dem oberen U-förmigen Abschnitt eine nach unten gebogene Oberkante (10) ;
— Positionieren der Karosserieseite entlang des Dachbleches durch Anbringen des U-förmigen Abschnittes gegenüber dem Seitenspant mit dessen Konkavität, die der Außenfläche dieses letzteren gegenüberliegt, und mit dessen gebogener Oberkante (10), die gegen den oberen Abschnitt angrenzt, die den Seitenspant mit dem Dachblech verbindet ;
— starres Befestigen der Unterkante des Spantes mit der Unterkante des U-förmigen Abschnittes der Karosserieseite ; und
— starres Befestigen der gebogenen Oberkante des U-förmigen Abschnittes mit dem Dachblechseitenspant durch Ausbilden einer kontinuierlichen Schweißnaht ohne Aufbringen von Schweißmetall.

6. Verfahren nach Anspruch 5, dadurch gekennzeichnet, daß die kontinuierliche Schweißnaht durch Fokusieren eines Laserstrahles (31) in einem Zwischenraum erhalten wird, der zwischen dem Spant und der gebogenen Kante des U-förmigen Abschnittes der Karosserieseite durch geeignetes Formen der oberen gebogenen Kante des U-förmigen Abschnittes ausgebildet ist.

7. Verfahren nach Anspruch 5 oder 6, dadurch gekennzeichnet, daß die das Befestigen der Unterkante des Dachblechseitenspantes (12) mit dem unteren Ende des U-förmigen Abschnittes der Karosserieseite (11) einschließende Stufe mittels elektrischem Punktschweißen durchgeführt wird.

8. Verfahren nach irgendeinem der Ansprüche 5 bis 7, dadurch gekennzeichnet, daß das längliche Kastenbauteil durch geeignetes Formen des U-förmigen Abschnittes der Karosserieseite (8) und des Dachblechseitenspantes (4) und nachfolgendes Befestigen der Vorgenannten direkt gegen Letzteren erhalten wird.

9. Verfahren nach irgendeinem der Ansprüche 5 bis 8, dadurch gekennzeichnet, daß die kontinuierliche Schweißnaht (18) in einer solchen Weise ausgebildet ist, das Dachblech im wesentlichen ohne Unterbrechung mit dem oberen U-förmigen Abschnitt der Karosserieseite zu verbinden, die in einer Linie mit dem Dachblech angeordnet ist.

## Revendications

1. Carrosserie de véhicule comprenant un panneau de toit (2) en tôle et au moins un côté (3) de la carrosserie en tôle, ce panneau de toit étant délimité latéralement par une aile (4) s'étendant vers le bas et à laquelle est fixée rigidement une portion longitudinale supérieure du côté de la carrosserie, à l'alignement avec le panneau de toit, caractérisée en ce que la portion supérieure (8) du côté de la carrosserie et l'aile (4) du panneau de toit sont conformés de telle manière que, lorsqu'elles se trouvent en contact mutuel, elles définissent une figure fermée en section transversale, la portion supérieure du côté de la carrosserie étant pourvue d'un bord longitudinal supérieur (10) recourbé vers le bas, venant en contact direct contre la surface externe de l'aile (4), à l'endroit de la portion de liaison entre cette aile et le panneau de toit (2), le bord supérieur (10) de la portion supérieure du côté de la carrosserie étant fixé à ladite portion de liaison (6) entre le panneau de toit et son aile au moyen d'un cordon de soudure continu formé de manière à joindre la portion supérieure (8) du côté de la carrosserie au panneau de toit (2) pratiquement sans discontinuité, le bord longitudinal inférieur (12) de l'aile du panneau de toit étant fixé directement et rigidement à la portion supérieure du côté de la carrosserie, à son extrémité distante de son bord supérieur, si bien que l'aile (4) du panneau de toit et la portion supérieure (8) du côté de la carrosserie définissent une structure de caisson pouvant encaisser une charge.

2. Carrosserie de véhicule suivant la revendication 1 caractérisée en ce que le bord inférieur (12) de l'aile délimitant le panneau de toit est fixé à l'extrémité inférieure de la portion supérieure du côté de la carrosserie au moyen d'une pluralité de points de soudure, l'aile étant formée d'une seule pièce avec le panneau de toit.

3. Carrosserie de véhicule suivant l'une quelconque des revendications 1 ou 2 caractérisée en ce que le bord supérieur (10) de la portion supérieure du côté de la carrosserie est conformé de telle façon que, lorsque le côté de la carrosserie et le panneau de toit sont placés l'un contre l'autre, un espace soit formé entre ce bord et la portion qui relie l'aile au panneau de toit, cet espace permettant à un faisceau laser de pénétrer entre la surface externe de l'aile du panneau de toit et le bord supérieur de la portion supérieure du côté de la carrosserie, à partir de l'extérieur de la carrosserie de véhicule, sans réflexion appréciable afin de produire le cordon de soudure continu.

4. Carrosserie de véhicule suivant l'une quelconque des revendications précédentes caractérisée en ce que la portion supérieure (8) du côté de la carrosserie a une section transversale sensiblement en forme de U, avec sa concavité tournée vers l'aile délimitant le panneau de toit, et elle comprend une partie supérieure (25), immédiatement adjacente au bord supérieur recourbé, pour assurer sa fixation sur le panneau de toit, cette partie supérieure (25) étant alignée avec le panneau de toit et ayant sensiblement le même profil transversal que ce dernier, de manière à définir un prolongement latéral de celui-ci.

5. Procédé pour fabriquer une carrosserie de véhicule comprenant un panneau de toit (2), au moins un côté (3) de la carrosserie fixé au panneau de toit, et un élément caisson longitudinal situé latéralement le long du panneau de toit, entre celui-ci et le côté de la carrosserie, et rigide avec ceux-ci, caractérisé en ce qu'il comprend les étapes consistant à former une aile latérale (4), recourbée vers le bas, le long du panneau de toit, à former, au sommet du côté de la carrosserie, une portion profilée, en coupe transversale, sous la forme d'un U disposé transversalement et à former, sur cette portion supérieure en forme de U, un bord supérieur (10) recourbé vers le bas, à mettre en place le côté de la carrosserie le long du panneau de toit en plaçant la portion en forme de U en regard de l'aile latérale, avec sa concavité tournée vers la surface externe de cette aile latérale et avec son bord supérieur recourbé (10) en butée contre la portion supérieure qui relie l'aile latérale au panneau de toit, à fixer rigidement le bord inférieur de l'aile au bord inférieur de la portion en forme de U du côté de la carrosserie, et à fixer rigidement le bord supérieur recourbé de la portion en forme de U à l'aile latérale du panneau de toit, en formant un cordon de soudure continu, sans application de métal de soudage.

6. Procédé suivant la revendication 5 caractérisé en ce que le cordon de soudure continu est obtenu en focalisant un faisceau laser (31) vers et dans un espace (16) qui est formé, entre l'aile latérale et le bord recourbé de la portion en forme de U du côté de la carrosserie, par un façonnage approprié du bord recourbé supérieur de la portion en forme de U.

7. Procédé suivant l'une quelconque des revendications 5 ou 6 caractérisé en ce que l'étape de la fixation du bord inférieur (12) de l'aile latérale du panneau de toit à l'extrémité inférieure (11) de la portion en forme de U du côté de la carrosserie est réalisé par un soudage électrique par points.

8. Procédé suivant l'une quelconque des revendications 5 à 7 caractérisé en ce que l'élément formant caisson longitudinal est obtenu par une conformation appropriée de la portion en forme de U (8) du côté de la carrosserie et de l'aile latérale (4) du panneau de toit et en montant ensuite directement la portion en forme de U contre l'aile latérale.

9. Procédé suivant l'une quelconque des revendications 5 à 8 caractérisé en ce que le cordon de soudure continu (18) est formé de manière à joindre le panneau de toit, pratiquement sans discontinuité, à la portion supérieure, en forme de U, du côté de la carrosserie qui est alignée avec le panneau de toit.

Fig.1

Fig.2